# EUROPEAN PATENT APPLICATION

(11) **EP 4 579 079 A1**
(43) Date of publication of application: **02.07.2025**
(21) Application number: 24222353.5
(22) Date of filing: 20.12.2024
(51) Int. Cl.: F04B 35/04, F04B 39/10, F04B 39/12, F04B 41/06

(54) **INTEGRATED COMPRESSORS, AND STSTEMS AND VEHICLES COMPRISING INTEGRATED COMPRESSORS**

(30) Priority: 28.12.2023 CN 202311832441; 08.10.2024 CN 202411396502
(71) Applicant: Volvo Car Corporation, 405 31 Göteborg (SE)
(72) Inventor: FAN, Hongjun, Shanghai, 201815 (CN); YANG, Shiyin, Shanghai, 201815 (CN); GUO, Jun, Shanghai, 201815 (CN)
(74) Representative: Maiwald GmbH

(57) **Abstract**

The present invention discloses an integrated compressor for a vehicle, the integrated compressor comprising: a motor; an inverter connected to or integrated into the motor; a control unit electrically connected to the inverter to control the starting and stopping of the motor via the inverter; characterized in that the integrated compressor comprises: a first compression chamber and a second compression chamber, which are connected to the motor, respectively; a first two-position-two-way valve connected to the first compression chamber; a second two-position-two-way valve connected to the second compression chamber; and a first inlet line which receives ambient air input at one end and is connected to the second compression chamber at the other end. The present invention also discloses a system in a vehicle comprising an on-board refrigerator, an air suspension device, and the integrated compressor connected to both.

## Description

### CROSS-REFERENCE TO RELATED APPLICATIONS

This application claims the benefits of priorities of Chinese Application No. 202311832441.3, titled "INTEGRATED COMPRESSORS AND SYSTEMS COMPRISING INTEGRATED COMPRESSORS," and filed December 28, 2023, and Chinese Application No. 202411396502.0, titled "INTEGRATED ELECTRIC COMPRESSORS AND VEHICLES," and filed October 8, 2024.

### TECHNICAL FIELD

The present invention relates to the field of vehicle thermal cycling systems and specifically to an integrated compressor, a system comprising the integrated compressor and a vehicle comprising the integrated compressor.

### BACKGROUND

Electric vehicles rely on electric motors for a variety of auxiliary functions, including driving the air suspension device and refrigerator compressor, which eliminates the need for a separate belt-driven compressor from the engine. In the prior art, a piston reciprocating air compressor is typically used for the vehicle's air suspension device, taking into account factors such as pressure requirements, flow rate, and noise. R1234yf refrigerant is increasingly used in refrigerator compressors for electric vehicles, given that it has a lower environmental impact than older refrigerants such as R134a. Electrically driven compressors are usually more expensive than conventional engine driven compressors. Both air suspension devices and refrigerator compressors in electric vehicles run intermittently on demand. This may result in lower utilization than a continuously running engine-driven compressor. In addition, electrically driven compressors generate electromagnetic interference (EMC), and compressor noise is a concern that needs to be addressed for proper vehicle operation and passenger comfort.

Furthermore, the field of compressors has long been characterized by equipment designed for specific tasks, with each unit compressing only one medium and offering a limited pressure range. This specialization led to inefficiencies in applications requiring multiple compression functions, such as automotive systems requiring both air suspension and refrigeration. The use of multiple specialized compressors adds cost, complexity and space requirements, as well as challenges in managing noise, vibration and electromagnetic compatibility. The limitations of existing compressors have led technicians to expect the development of a more versatile and integrated solution. The ideal compressor would be able to handle a wide range of medium, offer a wider pressure range, and operate in a variety of modes to meet different needs. Such a device simplifies the system, reduces costs and improves overall efficiency. Integrating multiple functions into a single unit also simplifies design and manufacturing, resulting in a more compact and reliable solution.

### SUMMARY OF INVENTION

In order to solve the problems in the prior art, the present invention proposes an integrated compressor shared by a motor and a controller. The compressor according to the present invention has compression devices arranged at each end of the motor, such that the same integrated compressor can be shared by a vehicle refrigerator and an air suspension device.

In order to solve the problems in the prior art, the present application further proposes an integrated compressor that integrates multiple compression functions into a compact device, thereby solving the above technical problems.

The present invention discloses an integrated compressor for a vehicle, the integrated compressor comprising: a motor; an inverter connected to the motor or integrated into the motor; a control unit electrically connected to the inverter to control the starting and stopping of the motor via the inverter; characterized in that the integrated compressor comprises: a first compression chamber and a second compression chamber, both of which are connected to the motor; a first two-position-two-way valve connected to the first compression chamber; a second two-position-two-way valve connected to the second compression chamber; and a first inlet line receiving ambient air input at one end and connected to the second compression chamber at the other end.

According to an optional embodiment, the first two-position-two-way valve comprises: a first intake port connected to an exhaust port of the first compression chamber; a first exhaust port connected to an intake port of the first compression chamber; and a first valve spool for selectively connecting to or disconnecting from the first intake port and the first exhaust port; wherein, in the case where the first intake port and the first exhaust port are connected, the gas discharged from the first compression chamber is directed back to the first compression chamber.

According to an optional embodiment, the second two-position-two-way valve comprises: a second intake port connected to an exhaust port of the second compression chamber; a second exhaust port connected to an intake port of the second compression chamber; and a second valve spool for selectively connecting to or disconnecting from the second intake port and the second exhaust port; wherein, in the case where the second intake port and the second exhaust port are connected, the gas discharged from the second compression chamber is directed back to the second compression chamber.

According to an optional embodiment, the control unit is configured to selectively control the state of the first two-position-two-way valve and the second two-position-two-way valve according to the actual needs of the vehicle.

According to an optional embodiment, the control unit is configured to control the first two-position-two-way valve to be disconnected upon receipt of the on-board refrigerator activation signal, so that the refrigerant is compressed in the first compression chamber.

According to an optional embodiment, the control unit is configured to control the second two-position-two-way valve to be disconnected upon receipt of the air suspension device activation signal, so that ambient air enters the first inlet line and enters the second compression chamber after being filtered by the air filter in the first inlet line, then compressed in the second compression chamber.

The present invention also discloses a system in a vehicle, characterized in that the system comprises: an integrated compressor according to the foregoing; an on-board refrigerator connected to the integrated compressor to receive refrigerant from a first compression chamber of the integrated compressor and to return the refrigerant after participating in refrigeration to a motor of the integrated compressor to cool the motor; and an air suspension device connected to an integrated compressor to receive air from a second compression chamber of the integrated compressor.

According to an optional embodiment, the on-board refrigerator comprises: a condenser connected to the first compression chamber of the integrated compressor; a first exhaust line which connects the condenser to the first compression chamber of the integrated compressor; a temperature pressure sensor provided in the first exhaust line; a fan arranged near the condenser to dissipate heat from the condenser; an evaporator connected to the condenser with the aid of a refrigerant line; a second inlet line which connects the evaporator to the motor; an electronic expansion valve provided in the refrigerant line; and a refrigerator cooling chamber connected to an evaporator to cool with the aid of heat exchange with the evaporator.

According to an optional embodiment, the air suspension device comprises: a two-position-four-way valve; a second exhaust line which connects the two-position-four-way valve and a second compression chamber of the integrated compressor; an air suspension main line connected to the two-position-four-way valve; a pressure sensor, a first solenoid valve, a second solenoid valve, a third solenoid valve, a fourth solenoid valve, and a fifth solenoid valve, all of which are connected to the air suspension main line; an air storage tank connected to the first solenoid valve; a dryer provided in the second exhaust line; a left front wheel air suspension, a right front wheel air suspension, a left rear wheel air suspension, and a right rear wheel air suspension, which are connected to the second solenoid valve, the third solenoid valve, the fourth solenoid valve, and the fifth solenoid valve, respectively; a throttle valve provided in the air suspension main line; and a silencer connected to the two-position-four-way valve.

According to an optional embodiment, the two-position-four-way valves comprises: a third intake port connected to the second exhaust line via the dryer; a fourth intake port which bypasses the dryer and is connected directly to the second exhaust line; a third exhaust port connected to the air suspension main line; a fourth exhaust port connected to the silencer; and a third valve spool configured to selectively connect or disconnect the third intake port and the third exhaust port and to selectively connect or disconnect the fourth intake port and the fourth exhaust port.

The present invention also discloses an integrated compressor comprising: an electric motor; a first compressor connected to and driven by the electric motor; characterized in that the integrated compressor comprises a second compressor and a controller; the second compressor is connected to and driven by the electric motor; the controller is provided on the electric motor and is configured to control the starting and stopping of the electric motor, to control the direction of flow of the medium in the first compressor, and to control the direction of flow of the medium in the second compressor.

According to an optional embodiment, the first compressor and the second compressor are provided on opposite sides of the electric motor; the electric motor comprises an inlet, a stator, a rotor, a first crankshaft and a second crankshaft; the inlet is provided on the housing of the electric motor and is fluidly connected to the inner cavity of the electric motor; the stator and the rotor are each provided in an inner cavity of the electric motor; the first crankshaft extends from the rotor into the first compressor; and the second crankshaft extends from the rotor into the second compressor.

According to an optional embodiment, the first compressor comprising a first control valve; and
the first control valve is configured to be operable to move between a plurality of positions to change the direction of flow of the medium in the first compressor, changing the state of work done by the first compressor without changing the operating state of the electric motor.

According to an optional embodiment, the second compressor comprising a second control valve; and the second control valve is configured to be operable to move between a plurality of positions to change the direction of flow of the medium in the second compressor to change the state of work done by the second compressor without changing the state of operation of the electric motor.

According to an optional embodiment, the electric motor comprises a stator, a rotor, a electric motor shaft, and a low-pressure inlet; the stator and the rotor are each provided in an inner cavity of the electric motor; the electric motor shaft is fixed to the rotor or integrally molded with the rotor; and the low-pressure inlet is provided on the housing of the electric motor and is connected to the inner cavity of the electric motor.

According to an optional embodiment, the integrated compressor comprises a compressor section, a variator, a piston connector, a fourth chamber, a fifth chamber, a sixth chamber, a fourth piston, a fifth piston, and a sixth piston; the piston connector is slidably provided in the compressor section and is connected to the electric motor via the variator; the fourth chamber, the fifth chamber and the sixth chamber are provided in the fourth chamber, the fifth chamber and the sixth chamber, respectively, and are each connected to the piston connector; the fifth chamber and the sixth chamber are each connected to the fourth chamber; the fourth piston, the fourth chamber, the fifth piston and the fifth chamber constitute the first compressor; and the sixth piston and the sixth chamber constitute the second compressor.

According to an optional embodiment, the integrated compressor comprises a third control valve; and the third control valve is configured to be operable to move between a plurality of positions to change the direction of flow of the medium in the compressor section to change the state of work done by the first compressor without changing the operating state of the electric motor.

According to an optional embodiment, the integrated compressor comprises a fourth control valve; and the fourth control valve is configured to be operable to move between a plurality of positions to change the direction of flow of the medium in the compressor section to change the state of work done by the second compressor without changing the operating state of the electric motor.

According to an optional embodiment, the first compressor and the second compressor compress the same medium.

According to an optional embodiment, the first compressor and the second compressor compress different mediums.

The present invention also discloses a vehicle, characterized in that it comprises an integrated compressor according to the foregoing.

The integrated compressor according to the present invention combines the two compressors of the vehicle into one, sharing a single motor and controller, thereby significantly reducing production costs and reducing the overall size. The integrated compressor according to the present invention not only solves the noise and electromagnetic compatibility (EMC) problems, but also provides a more economical and compact solution for the vehicle, compared to the conventional technology where the compressors are independently configured.

Specifically, the integration of the refrigerator compressor and the compressor for the air suspension device opens up the possibility of efficiently utilizing space inside the vehicle. This intelligent design not only frees up space for placing the compressor inside the vehicle, but also helps to improve the design flexibility of the entire vehicle. The invention is expected to provide vehicle manufacturers with more flexible and innovative design options than traditional layout methods.

The system comprising an integrated compressor according to the present invention successfully integrates the refrigerator and the air suspension device of the vehicle, unified and managed under the same vehicle control unit (VCU). This integration not only reduces the number of controllers within the vehicle and reduces the complexity of the system, but also realizes efficient control of different functions by intelligent software. Users will experience more convenient and intelligent operation during use, providing a more enjoyable driving experience.

The design of sharing a single electric motor and controller reduces cost and complexity while providing operational flexibility. The ability to compress different mediums or the same medium simultaneously or independently opens up new possibilities for system design and optimization. The integration of refrigerant flow through the electric motor for cooling and heat recovery further enhances the efficiency and applicability of this application, making it a promising solution for a wide range of applications.

### BRIEF DESCRIPTION OF DRAWINGS

The foregoing and other aspects of the present application will be more fully understood from the foregoing detailed description and in conjunction with the following drawings. It should be noted that the proportions of the accompanying drawings may differ for purposes of clarity, but this will not affect the understanding of the present application.
FIG. 1 is a schematic diagram of an integrated compressor according to the present invention.
FIG. 2 is a schematic diagram of an integrated compressor according to another embodiment of the present invention.
FIG. 3 is a schematic diagram of an integrated compressor according to another embodiment of the present invention.
FIG. 4 is a block diagram of a system including an integrated compressor according to the present invention.
FIG. 5 is a side view of an integrated compressor for a vehicle according to another embodiment of the present application.
FIG. 6 is a top view of the integrated compressor of FIG. 5.
FIG. 7 is a cross-sectional view along line A-A of the integrated compressor of FIG. 6.
FIG. 8 is a cross-sectional view along line B-B of the integrated compressor of FIG. 6.
FIG. 9 is a cross-sectional view along line C-C of the integrated compressor of FIG. 5.
FIG. 10 is a cross-sectional view along line D-D of the integrated compressor of FIG. 5.
FIG. 11 is a top view of an integrated compressor for use in a vehicle according to another embodiment of the present application.
FIG. 12 is a cross-sectional view along line A-A of the integrated compressor of FIG. 11.
FIG. 13 is a partially enlarged view of the integrated compressor of FIG. 12
FIG. 14 is a cross-sectional view along line C-C of the integrated compressor of FIG. 11.
FIG. 15 is a side view of the integrated compressor of FIG. 11.
FIG. 16 is a cross-sectional view along line B-B of the integrated compressor of FIG. 15.
FIG. 17 is a side view of the integrated compressor of FIG. 11.
FIG. 18 is a cross-sectional view along line D-D of the integrated compressor of FIG. 17.

### DETAILED DESCRIPTION OF EMBODIMENTS

Exemplary embodiments of the present application will be described in greater detail below with reference to the accompanying drawings. Although exemplary embodiments of the present application are shown in the accompanying drawings, it should be understood, however, that the present application may be realized in various forms without being limited by the embodiments set forth herein. Rather, these embodiments are provided to enable a more thorough understanding of the present application and to convey the full scope of the present application to those skilled in the art.

It should be noted that the terms "mounted", "coupled", "connected" are to be understood in a broad sense, e.g. as a fixed connection, as a detachable connection, or as a connection in one piece; It may be a mechanical or electrical connection; it may be a direct connection or an indirect connection through an intermediate medium, or it may be a connection within two elements.

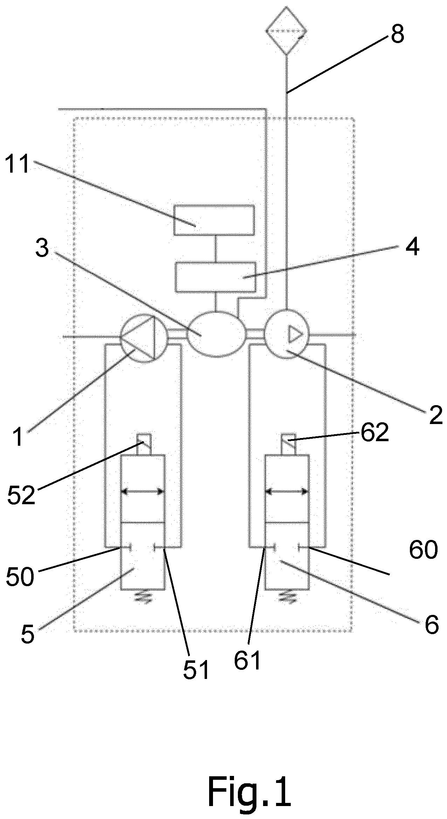

FIG. 1 is a schematic diagram of an integrated compressor according to the present invention. The integrated compressor comprises a first compression chamber 1, a second compression chamber 2, a motor 3, an inverter 4, a first two-position-two-way valve 5, a second two-position-two-way valve 6, a second inlet line 7, a first inlet line 8, a first exhaust line 9, a second exhaust line 10, and a control unit 11. The motor 3 is connected to the first compression chamber 1 and the second compression chamber 2 for powering the first compression chamber 1 and the second compression chamber 2. The inverter 4 is connected to the motor 3 or integrated into the motor 3 to control the starting and stopping of the motor 3. The first two-position-two-way valve 5 is connected to the first compression chamber 1. The second two-position-two-way valve 6 is connected to the second compression chamber 2. The second inlet line 7 is connected at one end to the on-board refrigerator, and at the other end to the motor 3. The first inlet line 8 inputs ambient air at one end, and at the other end is connected to the second compression chamber 2 and comprises an air filter therein. The first exhaust line 9 is connected at one end to the on-board refrigerator, and at the other end to the first compression chamber 1. The second exhaust line 10 is connected at one end to the air suspension device, and at the other end to the second compression chamber 2. The control unit 11 is electrically connected to the inverter 4 for controlling the starting and stopping of the motor 3 via the inverter 4.

The first two-position-two-way valve 5 comprises a first intake port 50, a first exhaust port 51, and a first valve spool 52. The first intake port 50 is connected to an exhaust port of the first compression chamber 1. The first exhaust port 51 is connected to an intake port of the first compression chamber 1. The first intake port 50 and the first exhaust port 51 are selectively connected or disconnected by the action of the first valve spool 52. In the case where the first intake port 50 and the first exhaust port 51 are connected, the gas discharged from the first compression chamber 1 is directed back to the first compression chamber 1 without entering the on-board refrigerator.

The second two-position-two-way valve 6 comprises a second intake port 60, a second exhaust port 61, and a second valve spool 62. The second intake port 60 is connected to an exhaust port of the second compression chamber 2. The second exhaust port 61 is connected to an intake port of the second compression chamber 2. The second intake port 60 and the second exhaust port 61 are selectively connected or disconnected by the action of the second valve spool 62. In case the second intake port 60 and the second exhaust port 61 are connected, the gas discharged from the second compression chamber 2 is directed back to the second compression chamber 2 without entering the air suspension device.

The inverter 4 activates the motor 3 upon receipt of an activation signal from the control unit 11. The control unit 11 selectively controls the state of the first two-position-two-way valve 5 and the second two-position-two-way valve 6 according to the actual needs of the vehicle.

In the case that the on-board refrigerator is to be activated, the control unit 11 controls the disconnection of the first two-position-two-way valve 5. The low-pressure, low-temperature refrigerant is introduced from the vehicle-mounted refrigerator into the motor 3 via the second inlet line 7 and then into the first compression chamber 1, cooling the motor 3 in the process. The high temperature and high-pressure refrigerant gas compressed in the first compression chamber 1 enters the vehicle-mounted refrigerator via the first exhaust line 9 to participate in refrigeration.

In case the air suspension device is to be activated, the control unit 11 controls the second two-position-two-way valve 6 to be disconnected. Ambient air enters the first inlet line 8 and enters the second compression chamber 2 after being filtered by an air filter in the first inlet line 8. The gas compressed in the second compression chamber 2 enters the air suspension device via the second exhaust line 10 to participate in the damping.

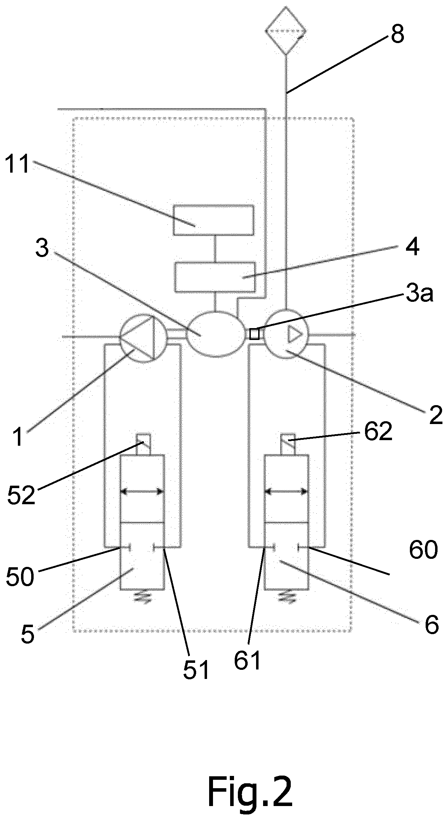

FIG. 2 is a schematic diagram of an integrated compressor according to another embodiment of the present invention. In addition to the components illustrated in FIG. 1, the integrated compressor of FIG. 2 comprises a first freewheel 3a for unidirectional transmission. The first freewheel 3a is connected between the motor 3 and the second compression chamber 2. In this way, when the motor 3, which can rotate in both directions, rotates in a first direction (e.g., clockwise), both the first compression chamber 1 and the second compression chamber 2 operate; when the motor 3 rotates in a second direction (e.g., counterclockwise) that is opposite to the first direction, the second compression chamber 2 does not operate and only the first compression chamber 1 operates. This configuration reduces the idling energy consumption of the integrated compressor.

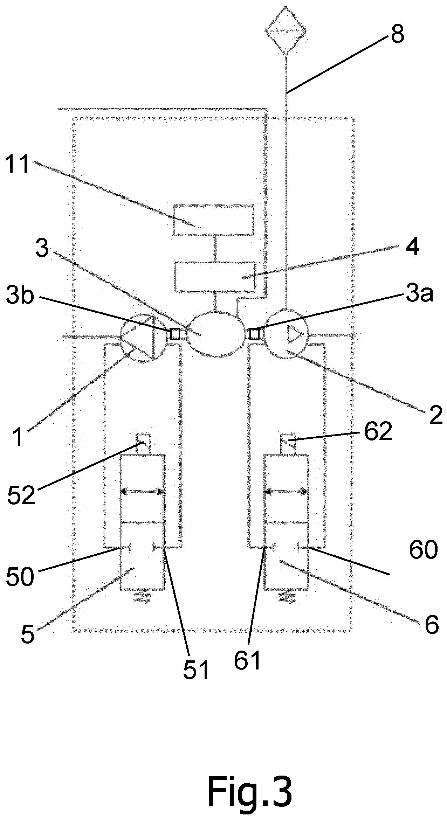

FIG. 3 is a schematic diagram of an integrated compressor according to yet another embodiment of the present invention. In addition to the components illustrated in FIG. 2, the integrated compressor of FIG. 3 comprises a second freewheel 3b for unidirectional transmission. The second freewheel 3b is connected between the motor 3 and the first compression chamber 1. In this way, when the motor 3, which can rotate in both directions, rotates in a first direction (e.g., clockwise), the first compression chamber 1 does not operate and only the second compression chamber 2 operates; when the motor 3 rotates in a second direction (e.g., counterclockwise) that is opposite to the first direction, the second compression chamber 2 does not operate and only the first compression chamber 1 operates. This configuration further reduces the idling energy consumption of the integrated compressor.

In the embodiment of FIGS. 2 and 3, the first freewheel 3a and the second freewheel 3b may also be replaced with an electromagnetic clutch or a ratchet mechanism.

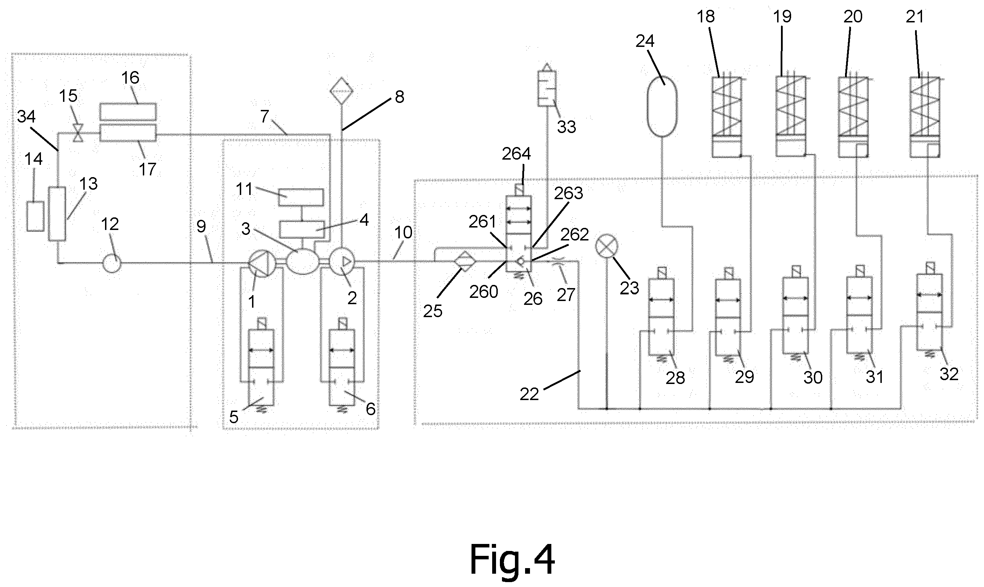

FIG. 4 is a block diagram of a system in a vehicle according to the present invention. The system comprises an integrated compressor, an on-board refrigerator and an air suspension device. The on-board refrigerator comprises a temperature and pressure sensor 12, a condenser 13, a fan 14, an electronic expansion valve 15, a refrigerator cooling chamber 16, and an evaporator 17. The air suspension device comprises a left front wheel air suspension 18, a right front wheel air suspension 19, a left rear wheel air suspension 20, a right rear wheel air suspension 21, an air suspension main line 22, a pressure sensor 23, an air storage tank 24, a dryer 25, a two-position-four-way valve 26, a throttle valve 27, a first solenoid valve 28, a second solenoid valve 29, a third solenoid valve 30, a fourth solenoid valve 31, a fifth solenoid valve 32, a silencer 33, and a refrigerant line 34.

The temperature pressure sensor 12 is provided in the first exhaust line 9. The condenser 13 is connected to the first exhaust line 9. The fan 14 is arranged near the condenser 13 to dissipate heat from the condenser 13. The evaporator 17 is connected to the condenser 13 on one side via a refrigerant line 34 and on the other side to a second inlet line 7. The electronic expansion valve 15 is provided in the refrigerant line 34. The refrigerator cooling chamber 16 is connected to the evaporator 17 to cool the refrigerator with the aid of heat exchange with the evaporator 17.

The dryer 25 is provided in the second exhaust line 10. The two-position-four-way valve 26 is connected to the dryer 25 and is also connected to the second exhaust line 10 via another bypass line that bypasses the dryer 25. The air suspension main line 22 is connected to the two-position-four-way valve 26. The throttle valve 27 is provided in the air suspension main line 22. The pressure sensor 23, the first solenoid valve 28, the second solenoid valve 29, the third solenoid valve 30, the fourth solenoid valve 31, and the fifth solenoid valve 32 are connected to the air suspension main line 22. The air storage tank 24 is connected to the first solenoid valve 28. The left front wheel air suspension 18, the right front wheel air suspension 19, the left rear wheel air suspension 20, and the right rear wheel air suspension 21 are connected to the second solenoid valve 29, the third solenoid valve 30, the fourth solenoid valve 31, and the fifth solenoid valve 32, respectively. The silencer 33 is connected to the two-position-four-way valve 26.

The two-position-four-way valve 26 comprises a third intake port 260, a fourth intake port 261, a third exhaust port 262, a fourth exhaust port 263, and a third valve spool 264. The third intake port 260 is connected to the second exhaust line 10 via the dryer 25. The fourth intake port 261 bypasses the dryer 25 and is directly connected to the second exhaust line 10. The third exhaust port 262 is connected to the air suspension main line 22. The fourth exhaust port 263 is connected to the silencer 33. The third intake port 260 and the third exhaust port 262 are selectively connected or disconnected by the action of the third valve spool 264. The fourth intake port 261 and the fourth exhaust port 263 are selectively connected or disconnected by the action of the third valve spool 264. With the third intake port 260 and the third exhaust port 262 connected, the gas exiting the second exhaust line 10, after being dried by the dryer 25, enters the air suspension main line 22 via the throttle valve 27, and subsequently enters one or more of the left front wheel air suspension 18, the right front wheel air suspension 19, the left rear wheel air suspension 20, and the right rear wheel air suspension 21 in order to participate in the dampening. After the air pressure in the air storage tank 24 reaches the protection value, the motor 3 is stopped, the fourth intake port 261 and the fourth exhaust port 263 are connected, and the gas from the air storage tank 24 enters the dryer 25 through the air suspension main line 22, where it is dried, and then enters the silencer 33, and is then discharged into the environment without participating in the damping.

In the case where the vehicle refrigerator is to be activated, the first two-position-two-way valve 5 is disconnected so that the low-pressure, low-temperature refrigerant is introduced into the motor 3 via the second inlet line 7, and then enters the first compression chamber 1, cooling the motor 3 in the process. The high temperature and high-pressure refrigerant gas compressed in the first compression chamber 1 enters the vehicle refrigerator through the first exhaust line 9. The high-temperature and high-pressure refrigerant gas is cooled into a low-temperature and high-pressure refrigerant gas by a fan 14 in the condenser 13, and then becomes a low-temperature and low-pressure refrigerant gas after passing through the electronic expansion valve 15. The low-temperature and low-pressure refrigerant gas enters the evaporator 17 and cools the articles in the refrigerator cooling chamber 16 by heat conduction. The refrigerant gas discharged from the evaporator 17 returns to the first compression chamber 1 via the second inlet line 7.

The temperature-pressure sensor 12 is used to measure the temperature and pressure of the refrigerant gas in the first exhaust line 9 and sends a signal to the control unit 11 in case of temperature or pressure exceedance. The control unit 11 determines, on demand, whether the two-position-two-way valve 5 is merely switched on to short the first compression chamber 1 or whether the motor 3 is directly shut down.

In case the air suspension device is to be activated, the control unit 11 continuously detects the air pressure in the air storage tank 24 with the aid of the pressure sensor 23. In case the air pressure is too low, the control unit 11 activates the motor 3 with the aid of the inverter 4 and simultaneously disconnects the second two-position-two-way valve 6, so that the ambient air enters the second compression chamber 2 via the first inlet line 8, after being filtered by the air filter in the first inlet line 8. The compressed gas in the second compression chamber 2 enters the air suspension main line 22 via the second exhaust line 10, after being dried by the dryer 25 and entering the two-position-four-way valve 26, and then entering the air suspension main line 22 via the throttle valve 27. The air then enters the air storage tank 24 via the first solenoid valve 28 which is switched on. The control unit 11 activates the left front wheel air suspension 18, the right front wheel air suspension 19, the left rear wheel air suspension 20 and the right rear wheel air suspension 21 on demand. When the value of the pressure sensor 23 reaches a set value, the control unit 11 turns on the two-position-two-way valve 6 to short the second compression chamber 2, and sets the two-position-four-way valve 26 such that the third intake port 260 and the third exhaust port 262 are connected, and the fourth intake port 261 and the fourth exhaust port 263 are connected. In this way, a portion of the gas from the storage tank flows back to the dryer 25, taking a portion of the moisture with it and then exiting through the silencer to the atmosphere.

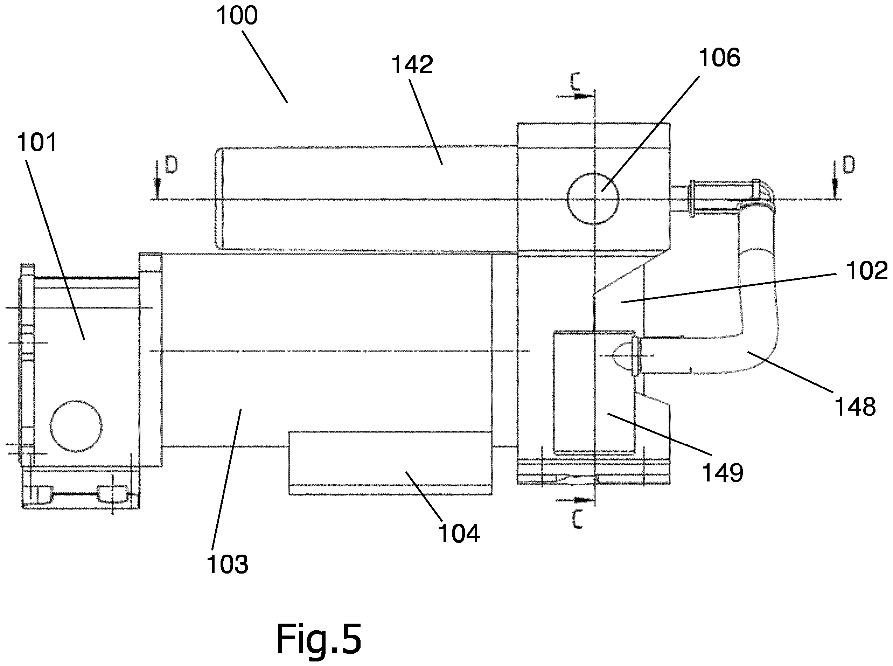

FIG. 5 is a side view of an integrated compressor for a vehicle according to another embodiment of the present application. As shown in FIG. 5, the integrated compressor 100 comprises a refrigerator compressor 101, an air suspension compressor 102, a electric motor 103 and a controller 104. The electric motor 103 is connected to the refrigerator compressor 101 and the air suspension compressor 102 to provide power to the refrigerator compressor 101 and the air suspension compressor 102. In this embodiment, the refrigerator compressor 101 and the air suspension compressor 102 are arranged on opposite sides of the electric motor 103. It will be appreciated that in other embodiments the refrigerator compressor 101 and the air suspension compressor 102 may also be arranged on the same side of the electric motor 103. A controller 104 is integrated to the electric motor 103 to control the starting and stopping of the electric motor 103.

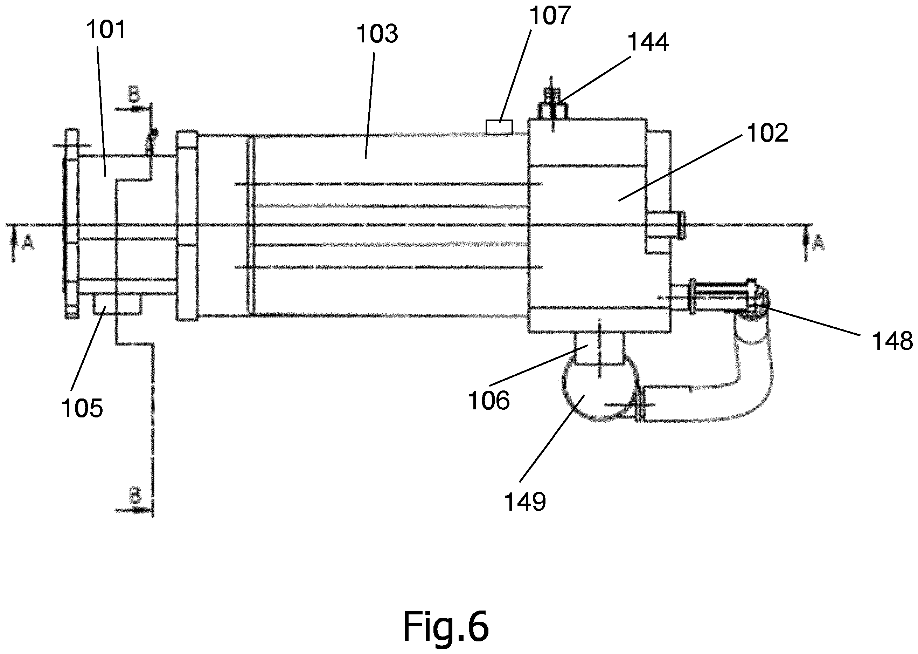

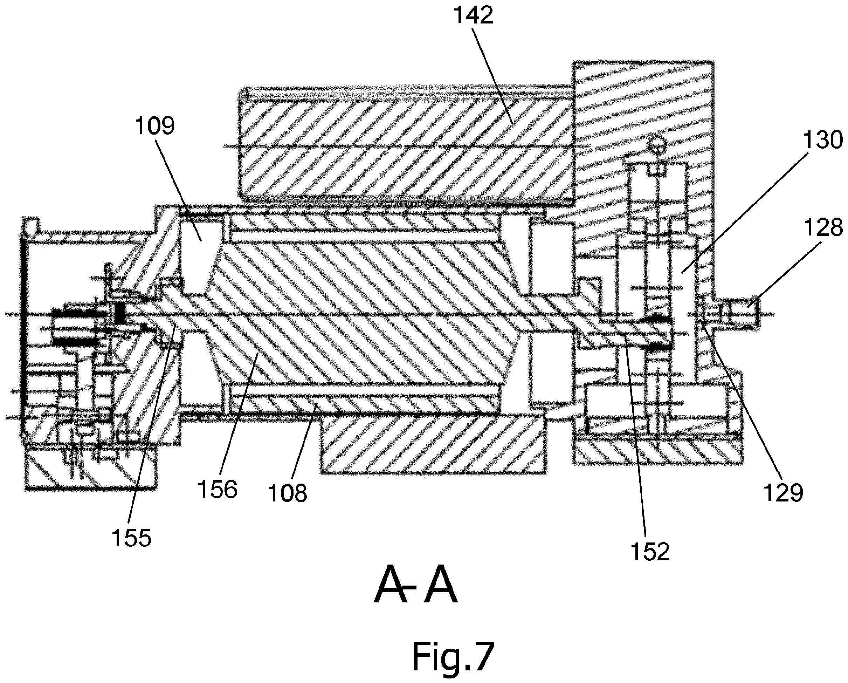

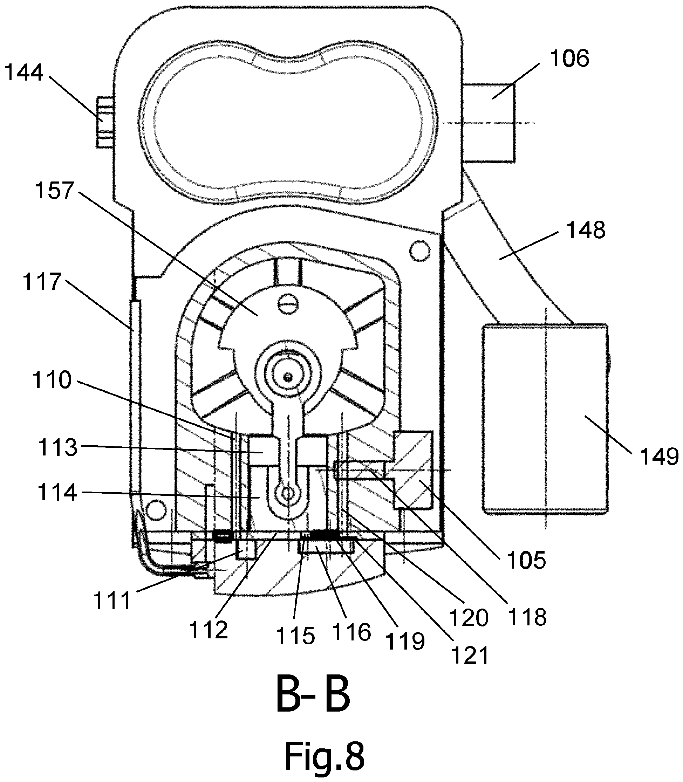

FIG. 6 is a top view of the integrated compressor of FIG. 5. FIG. 7 is a cross-sectional view along line A-A of the integrated compressor of FIG. 6. FIG. 8 is a cross-sectional view along line B-B of the integrated compressor of FIG. 6. As shown in FIGS. 6 and 7, the electric motor 103 comprises an inlet 107, a stator 108, a rotor 156, a first crankcase 109, a first crankshaft 155, and a second crankshaft 152. the inlet 107 is arranged on a housing of the electric motor 103 and is fluidly connected to an inner cavity of the electric motor 103. The stator 108, the rotor 156 and the first crankcase 109 are provided in the inner cavity of the electric motor 103. The stator 108 is fixed to the inner wall of the electric motor 103. The rotor 156 is rotatably provided inside the stator 108. The first crankcase 109 is provided between the rotor 156 and the refrigerator compressor 101 to transfer power from the rotor 156 to the refrigerator compressor 101. A part of the first crankshaft 155 is provided in the first crankcase 109 and another part is provided in the refrigerator compressor 101 and is fixed to the rotor 156 at one end. The second crankshaft 152 is provided in the air suspension compressor 102 and is secured to the rotor 156 at one end.

As shown in FIG. 8, the refrigerator compressor 101 comprises a first control valve 105, an inlet passage 110, a suction chamber 111, a first suction valve 112, a first chamber 113, a first piston 114, an exhaust hole 115, an exhaust chamber 116, an exhaust pipe 117, a first control pin 118, a bypass line 119, a bypass hole 120, a bypass valve 121, and a counterbalance block 157. The first control valve 105 is embedded in the housing of the refrigerator compressor 101 to change the refrigerant flow direction in the refrigerator compressor 101 based on the signals from the controller 104. The inlet passage 110 is provided inside the housing of the refrigerator compressor 101 and is connected to the first crankcase 109. The suction chamber 111 is provided inside the housing of the refrigerator compressor 101 and is connected to the inlet passage 110. The first chamber 113 is provided inside the housing of the refrigerator compressor 101 and is connected to the suction chamber 111. The first suction valve 112 is provided between the suction chamber 111 and the first chamber 113. The first piston 114 is slidable to change the flow direction of refrigerant in the refrigerator compressor 101 based on the signal from the controller 104. The first piston 114 is slidably provided in the first chamber 113. The exhaust hole 115 is connected to the first chamber 113 to discharge the compressed refrigerant. The exhaust chamber 116 is connected to the exhaust hole 115. The exhaust pipe 117 is connected between the exhaust chamber 116 and a refrigeration line (not shown) of the refrigerator system to deliver the compressed refrigerant to the refrigeration line. The bypass line 119 is connected to the first chamber 113. The bypass hole 120 is connected between the bypass line 119 and the first crankcase 109. The first control pin 118 is connected to the first control valve 105 and selectively blocks the bypass hole 120. The bypass valve 121 is provided in the bypass line 119 to prevent refrigerant in the bypass line 119 and the bypass hole 120 from flowing back into the first chamber 113. The counterbalance block 157 is provided on the second crankshaft 152 to counterbalance the inertia of the first piston 114 and to reduce the vibration generated by the first piston 114 during reciprocating motion.

The following describes the operation of the integrated compressor 100.

After the refrigerator compressor 101 is started, the refrigerant enters the inner chamber of the electric motor 103 through the inlet 107 and exchanges heat with the stator 108, and then enters the first crankcase 109. The refrigerant enters the suction chamber 111 from the first crankcase 109 through the inlet passage 110, and then enters the first chamber 113 through the first suction valve 112. The refrigerant is compressed in the first chamber 113 by the first piston 114, and then enters the exhaust chamber 116 through the exhaust hole 115. The compressed refrigerant enters the refrigeration line of the refrigerator system from the exhaust chamber 116 through the exhaust pipe 117 for refrigeration.

When the refrigerator compressor 101 is not required to operate, the integrated compressor 100 enters the air suspension compressor only mode if the air suspension compressor 102 is still required to operate. In the air suspension compressor only mode, the first control valve 105 opens (to the right in FIG. 8). At this time, the first control pin 118 connected to the first control valve 105 moves to the right, causing the bypass hole 120 to open. As the first piston 114 moves downward, the refrigerant returns directly to the crankshaft chamber 9 through the bypass line 119 and the bypass hole 120. In this case, the refrigerator compressor 101 has no pressure difference between the suction and discharge and therefore does not operate.

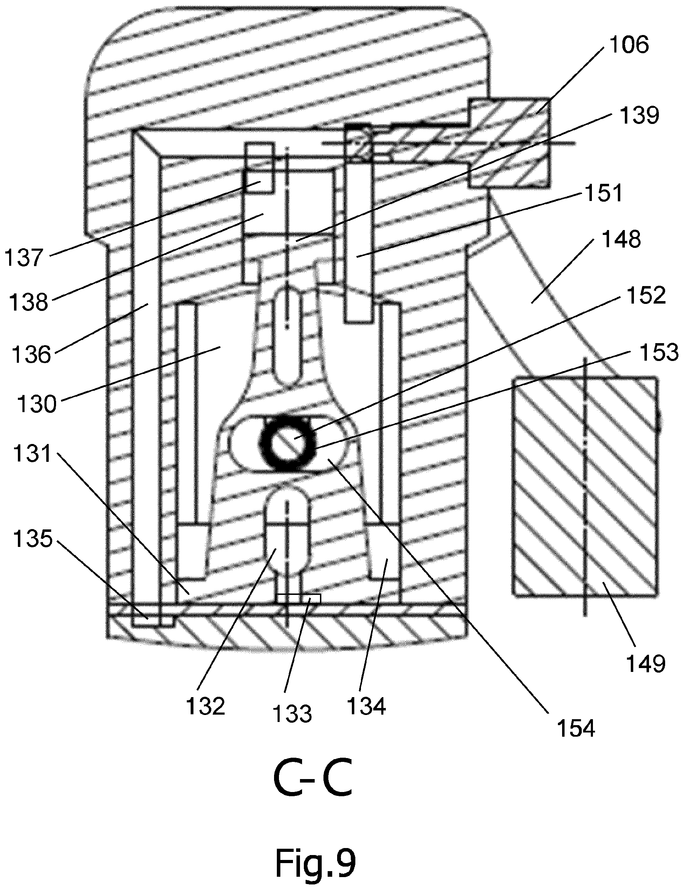

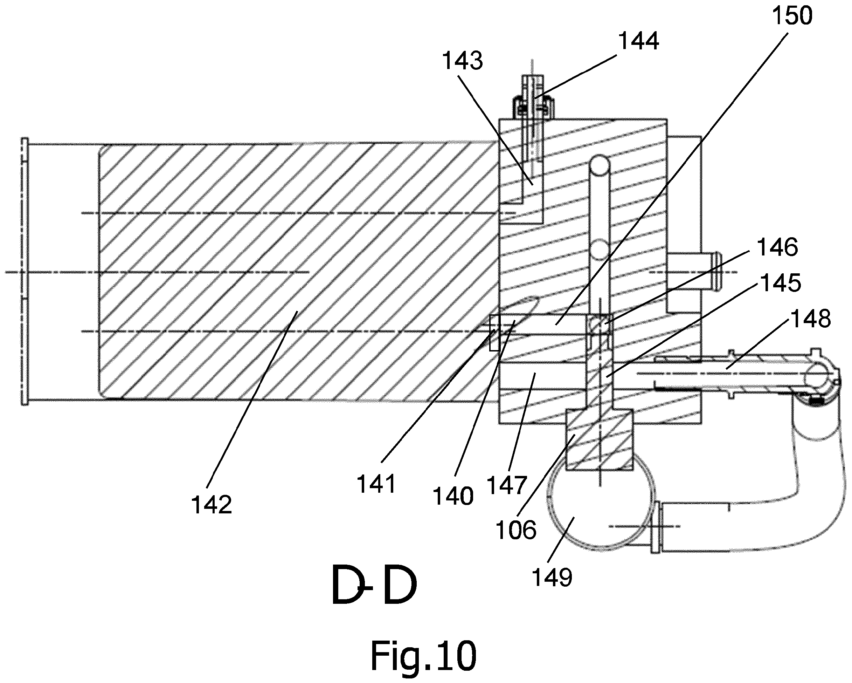

FIG. 9 is a cross-sectional view along line C-C of the integrated compressor of FIG. 1. FIG. 10 is a cross-sectional view along line D-D of the integrated compressor of FIG. 5. As shown in FIGS. 5, 7, 9, and 10, the air suspension compressor 102 comprises a second control valve 106, an air filter 128, a first inlet orifice 129, a second crankcase 130, a second piston 131, a second inlet orifice 132, a second suction valve 133, a second chamber 134, a first exhaust valve 135, a first exhaust passage 136, a third suction valve 137, a third chamber 138, a third piston 139, a second exhaust passage 140, a second exhaust valve 141, an air dryer 142, a high-pressure gas passage 143, an adapter 144, second control pin 145, a third control pin 146, a third exhaust passage 147, a fourth exhaust passage 148, a silencer 149, a fifth exhaust passage 150, a sixth exhaust passage 151, and a bearing 153. The second control valve 106 is embedded in the housing of the air suspension compressor 102 to change the air flow in the air suspension compressor 102 based on the signals from the controller 104. The air filter 128 is provided on the housing of the air suspension compressor 102. The first inlet orifice 129 is connected between the air filter 128 and the inner chamber of the air suspension compressor 102. The second crankcase 130, the second chamber 134 and the third chamber 138 are provided in the inner chamber of the air suspension compressor 102. The second crankcase 130 is connected to the first inlet orifice 129. The second chamber 134 and the third chamber 138 are connected to opposite sides of the second crankcase 130, respectively. A portion of the second piston 131 is slidably arranged in the second chamber 134 and another portion is arranged in the second crankcase 130. A portion of the third piston 139 is slidably arranged in the third chamber 138 and another portion is arranged in the second crankcase 130 and is connected to that portion of the second piston 131 arranged in the second crankcase 130. The second piston 131 and the third piston 139 together define an elongate piston bore 154. The second inlet orifice 132 is provided in the second piston 131 and is connected to the second crankcase 130. The second suction valve 133 is provided at an end of the second inlet orifice 132. The second chamber 134 is connected to the second crankcase 130. The first exhaust passage 136 is connected between the second chamber 134 and the third chamber 138. The first exhaust valve 135 is provided between the first exhaust passage 136 and the second chamber 134. The third intake valve 37 is provided between the first exhaust passage 136 and the third chamber 138. The air dryer 142 is connected to the body of the air suspension compressor 102. The second exhaust passage 140 is connected between the third chamber 138 and an inlet of the air dryer 142. The second exhaust valve 141 is provided between the second exhaust passage 140 and the air dryer 142. The high-pressure gas passage 143 is connected to one of the exhaust ports of the air dryer 142. The adapter 144 is connected between the high-pressure gas passage 143 and an air suspension system (not shown). The third control pin 146 is connected to one end of a second control pin 145. The second control pin 145 is connected to the second control valve 106 at the other end.

The third exhaust passage 147 is connected to another exhaust port of the air dryer 142. The fourth exhaust passage 148 is connected to the third exhaust passage 147. The fifth exhaust passage 150 is connected between the first exhaust passage 136 and the second exhaust passage 140. The sixth exhaust passage 151 is connected at one end to the intersection of the first exhaust passage 136 and the fifth exhaust passage 150, and at the other end to the second crankcase 130. The bearing 153 is secured to the second crankshaft 152 and is slidably arranged in the piston bore 154. Due to the presence of the bearing 153, rotation of the second crankshaft 152 can be transformed into reciprocal movement of the bearing 153 in the piston bore 154 in the first direction, reciprocal movement of the second piston 131 in the second chamber 134, and reciprocal movement of the third piston 139 in the third chamber 138. A second control pin 145 is provided at the connection between the third exhaust passage 147 and the fourth exhaust passage 148 to selectively block the connection between the two. The third control pin 146 is provided at the intersection of the first exhaust passage 136, the fifth exhaust passage 150 and the sixth exhaust passage 151 to selectively block the connection between the three.

The second control valve 106 has three positions. In a first position, the second control pin 145 connected to the second control valve 106 blocks the connection between the third exhaust passage 147 and the fourth exhaust passage 148, and the third control pin 146 connected to the second control pin 145 enables the first exhaust passage 136, the fifth exhaust passage 150 and the sixth exhaust passage 151 to be connected. In a second position, the second control pin 145 connected to the second control valve 106 blocks the connection between the third exhaust passage 147 and the fourth exhaust passage 148, and the third control pin 146 connected to the second control pin 145 blocks the connection between the first exhaust passage 136, the fifth exhaust passage 150, and the sixth exhaust passage 151. In a third position, the second control pin 145 connected to the second control valve 106 causes the third exhaust passage 147 and the fourth exhaust passage 148 to be connected, and the third control pin 146 connected to the second control pin 145 causes the first exhaust passage 136, the fifth exhaust passage 150 and the sixth exhaust passage 151 to be connected.

The following describes the operation of the integrated compressor 100.

After the air suspension compressor 102 is activated, air passes through the air filter 128 and enters the second crankcase 130 from the first inlet orifice 129. The air enters the second chamber 134 from the second crankcase 130 via the second inlet orifice 132 and the second suction valve 133. The air is compressed in the second chamber 134 to a medium-pressure, and then enters the third chamber 138 via the first exhaust valve 135, the first exhaust passage 136, and the third suction valve 137. The medium-pressure air is compressed in the third chamber 138 to a high-pressure state by the third piston 139. The medium-pressure air is compressed to a high-pressure in the third chamber 138 by a third piston 139. The high-pressure gas passes from the third chamber 138 through the second exhaust passage 140 and the second exhaust valve 141 into the air dryer 142. The gas is dried in the air dryer 142 and then delivered to the air suspension system through the high-pressure gas passage 143 and the adapter 144.

When the pressure in the air suspension system is sufficient, the air suspension compressor 102 should stop operating. At this point, the integrated compressor 100 enters the refrigerator compressor only mode if the refrigerator compressor 101 is still required to continue operating. In case of excess moisture in the air dryer 142, the second control valve 106 moves to a third position. In the third position, the third exhaust passage 147 and the fourth exhaust passage 148 are connected so that the high-pressure and dry gas from the air suspension system is blown back into the air dryer 142 via the high-pressure gas passage 143 to take away the moisture from the air dryer 142, and then passes through the third exhaust passage 147 into the fourth exhaust passage 148, and is finally discharged to the atmosphere via the silencer 149. When the blowback of the air dryer 142 is complete, the second control valve 106 is moved to the first position to block the connection between the third exhaust passage 147 and the fourth exhaust passage 148, and so that the first exhaust passage 136, the fifth exhaust passage 150, and the sixth exhaust passage 151 remain connected. In this way, the second exhaust passage 140 is at the same pressure as in the first exhaust passage 136, and there is no pressure difference between suction and exhaust, which corresponds to no work being done in the third chamber 138. Since the sixth exhaust passage 151 is connected to the second crankcase 130, and the first exhaust passage 136 is also connected to the second crankcase 130 at this time, there is no pressure difference between the suction and the exhaust in the second chamber 134, which corresponds to no work being done in the second chamber 134 as well.

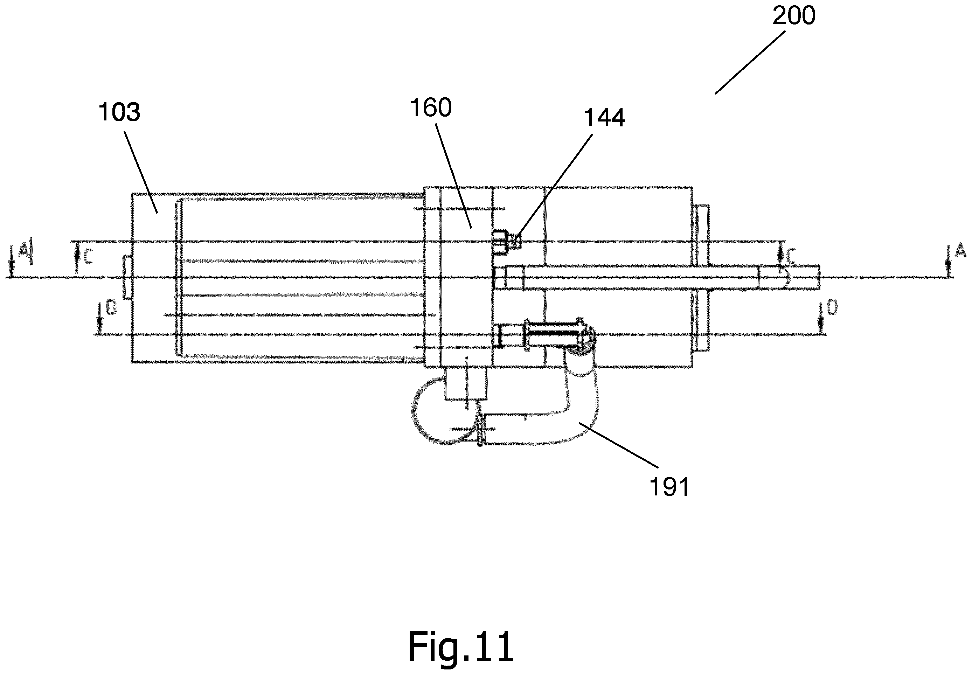

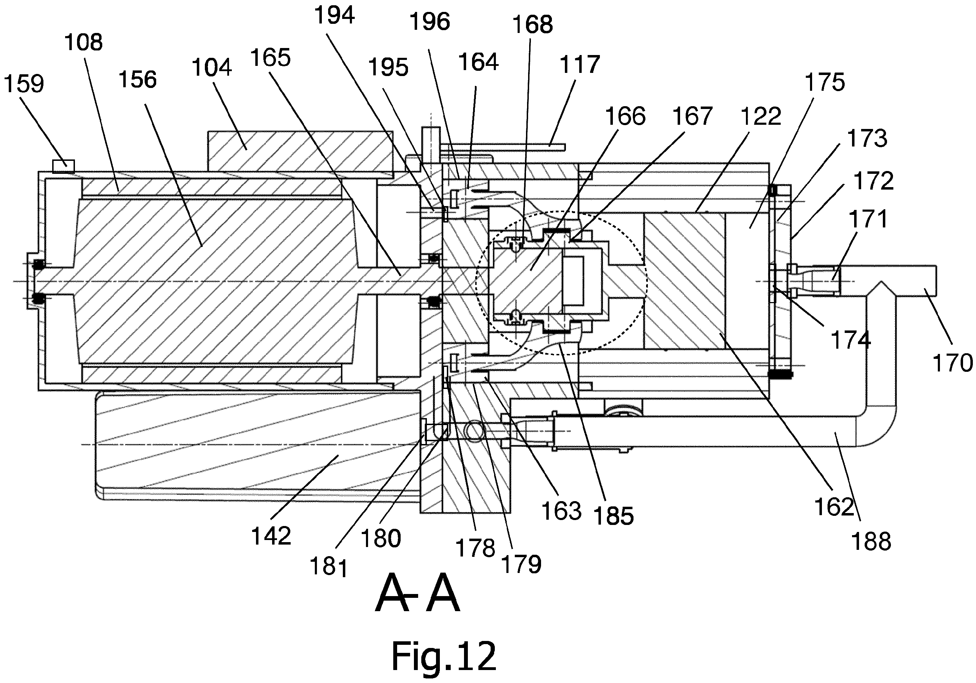

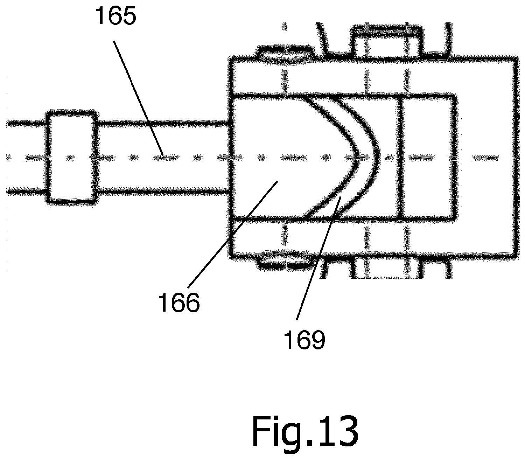

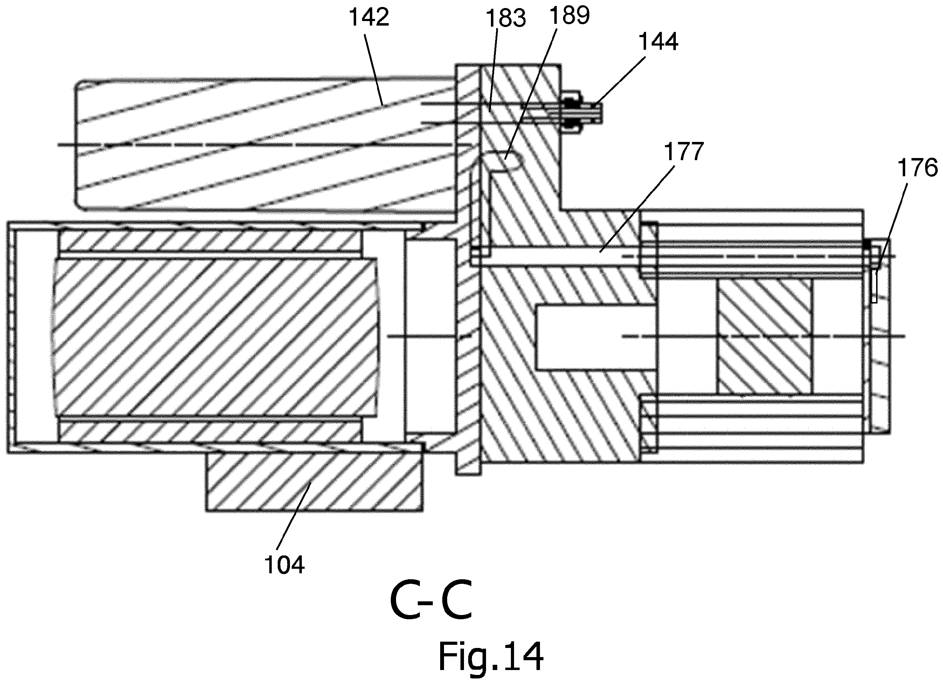

FIG. 11 is a top view of an integrated compressor for use in a vehicle according to a second embodiment of the present application. FIG. 12 is a cross-sectional view along line A-A of the integrated compressor of FIG. 11. FIG. 13 is a partially enlarged view of the integrated compressor of FIG. 12. FIG. 14 is a cross-sectional view along line C-C of the integrated compressor of FIG. 11. As shown in FIGS. 11-14, the integrated compressor 200 comprises a compressor section 160, an electric motor 103, and a controller 104. The compressor section 160 is connected to the electric motor 103 and comprises a first compressor 185 and a second compressor 122 integrated in the same housing. In this way, the first compressor 185 and the second compressor 122 can be considered to be arranged on the same side of the electric motor 103. The controller 104 is integrated to the electric motor 103 to control the starting and stopping of the electric motor 103.

The electric motor 103 comprises a stator 108, a rotor 156, a motor shaft 165, and a low-pressure inlet 159. The stator 108, the rotor 156, and the motor shaft 165 are arranged in an inner cavity of the electric motor 103. The stator 108 is fixed to the inner wall of the electric motor 103. The rotor 156 is rotatably provided inside the stator 108. The motor shaft 165 is fixed to the rotor 156 or integrally molded with the rotor 156. The low-pressure inlet 159 is provided on the housing of the electric motor 103 and is connected to the inner cavity of the electric motor 103.

The integrated compressor 200 further comprises a fourth piston 162, a fifth piston 163, a sixth piston 164, a variator 166, a piston connector 167, a sliding ball 168, a slide groove 169, a suction pipe 170, a connector 171, a rear cover 172, a valve plate 173, a fourth suction valve 174, a fourth chamber 175, a third exhaust valve 176, a medium-pressure passage 177, a fifth suction valve 178, a fifth chamber 179, a seventh exhaust passage 180, a fourth exhaust valve 181, an air dryer 142, an eighth exhaust passage 183, an adapter 144, a sixth chamber 196, and an exhaust pipe 117. The fourth piston 162, the fourth chamber 175, the fifth piston 163, and the fifth chamber 179 together constitute a first compressor 185. The sixth piston 164 and the sixth chamber 196 constitute a second compressor 122.

The fourth chamber 175, the fifth chamber 179 and the sixth chamber 196 are each provided in the compressor section 160. The fifth chamber 179 and the sixth chamber 196 are each connected to the fourth chamber 175. The fourth piston 162 is slidably provided in the fourth chamber 175. The fifth piston 163 is slidably provided in the fifth chamber 179. The sixth piston 164 is slidably provided in the sixth chamber 196. The variator 166 is connected to the motor shaft 165 and is provided with a curved and extended slide groove 169. The piston connector 167 is connected to the fourth piston 162, the fifth piston 163, and the sixth piston 164, and is connected to the variator 166 via a sliding ball 168. a portion of the sliding ball 168 is embedded in the piston connector 167, and another portion is slidably provided in the slide groove 169. The rear cover 172 is provided at an end of the compressor section 160. The valve plate 173 is provided between the rear cover 172 and the fourth chamber 175 to close off the fourth chamber 175. The connector 171 is provided on the rear cover 172. The suction pipe 170 is connected between the connector 171 and the external environment. The fourth suction valve 174 is provided on the valve plate 173 and is connected to the connector 171. The medium-pressure passage 177 is connected between the fourth chamber 175 and the fifth chamber 179. The third exhaust valve 176 is provided at the connection between the medium-pressure passage 177 and the fourth chamber 175. The fifth suction valve 178 is provided at the connection between the medium-pressure passage 177 and the fifth chamber 179. The air dryer 142 is connected to the compressor section 160. The seventh exhaust passage 180 is connected between the air dryer 142 and the fifth chamber 179. The fourth exhaust valve 181 is provided at the connection between the seventh exhaust passage 180 and the air dryer 142. The eighth exhaust passage 183 is connected between the air suspension system (not shown) and the air dryer 142. The adapter 144 is provided at the connection between the eighth exhaust passage 183 and the air suspension system. The exhaust pipe 117 is connected between a sixth chamber 196 and a refrigeration line of a refrigerator system (not shown).

The following describes the operation of the integrated compressor 200.

After the electric motor 103 is activated, the motor shaft 165 rotates the variator 166 so that the sliding ball 168 on the piston connector 167 slides in the slide groove 169 on the variator 166 to convert the rotational motion of the motor shaft 165 into the reciprocating motion of the piston connector 167.

When the second compressor 122 is not required to operate, the integrated compressor 200 enters an air suspension compressor only mode if the first compressor 185 is still required to operate. In the air suspension compressor only mode, air is drawn into the fourth chamber 175 via the suction pipe 170 and connector 171, through the rear cover 172, and then via the fourth suction valve 174 on the valve plate 173. The air is compressed in the fourth chamber 175 to a medium-pressure state by the fourth piston 162, then enters the medium-pressure passage 177 via the third exhaust valve 176, and then enters the fifth chamber 179 via the fifth suction valve 178. The air is compressed in the fifth chamber 179 to a high-pressure state by the fifth piston 163, and then enters the air dryer 142 via the seventh exhaust passage 180 and the fourth exhaust valve 181. the gas is dried and then enters the air suspension system via an eighth exhaust passage 183 and an adapter 144.

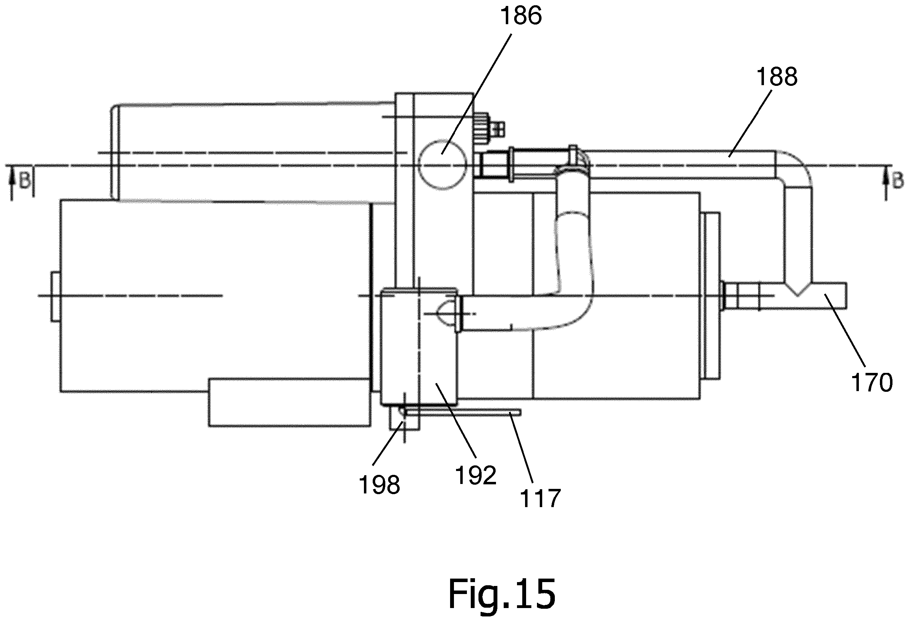

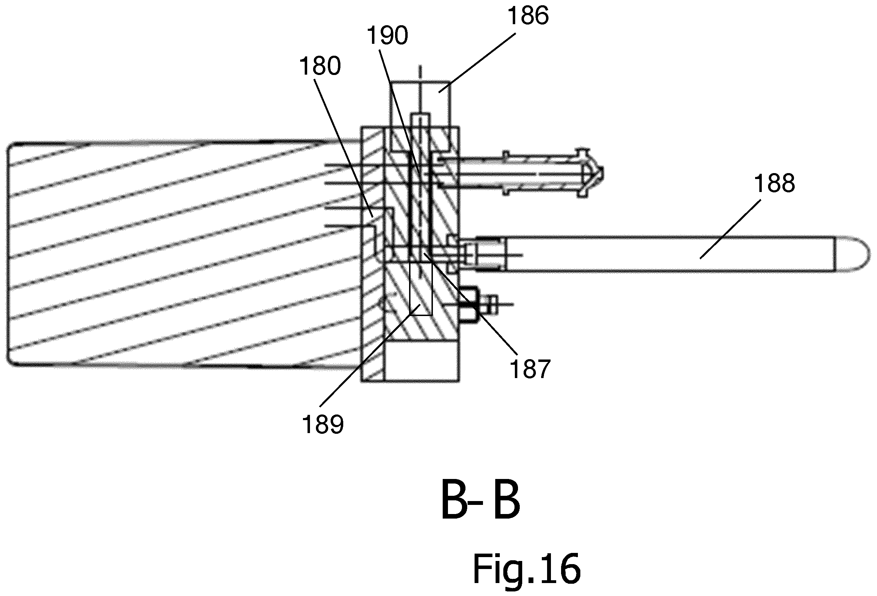

FIG. 15 is a side view of the integrated compressor of FIG. 11. FIG. 16 is a cross-sectional view along line B-B of the integrated compressor of FIG. 15. As shown in FIGS. 15 and 16, the integrated compressor 200 further comprises a third control valve 186, a fourth control pin 187, an eighth exhaust passage 188, a ninth exhaust passage 189, a fifth control pin 190, a tenth exhaust passage 191, a silencer 192, a refrigerant passage 194, and a refrigerant valve plate 195.The third control valve 186 is embedded in a housing of the compressor section 160. The fourth control pin 187 is connected to one end of a fifth control pin 190. The fifth control pin 190 is connected to the third control valve 186 at the other end. The eighth exhaust passage 188 is connected to the suction pipe 170. The ninth exhaust passage 189 is connected to the medium-pressure passage 177. The fourth control pin 187 is provided at the intersection of the seventh exhaust passage 180, the eighth exhaust passage 188, and the ninth exhaust passage 189 to selectively block the connection between the three. The silencer 192 is connected to the air dryer 142 via the tenth exhaust passage 191. The fifth control pin 190 is provided at the junction of the air dryer 142 and the tenth exhaust passage 191 to selectively block the connection between the two. The refrigerant passage 194 is connected to a sixth chamber 196. The refrigerant valve tab 95 is provided at the connection between the refrigerant passage 194 and the sixth chamber 196.

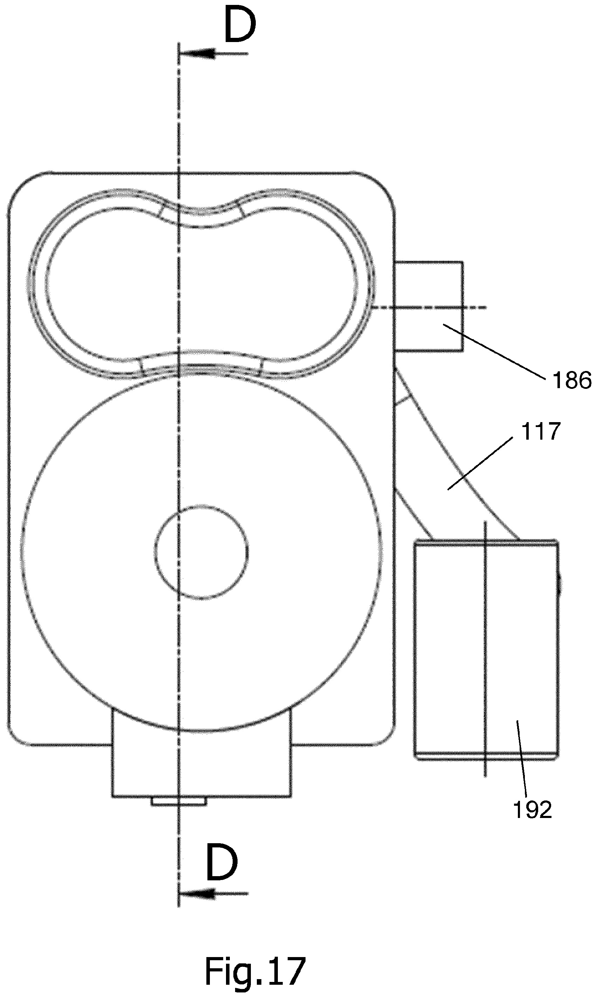

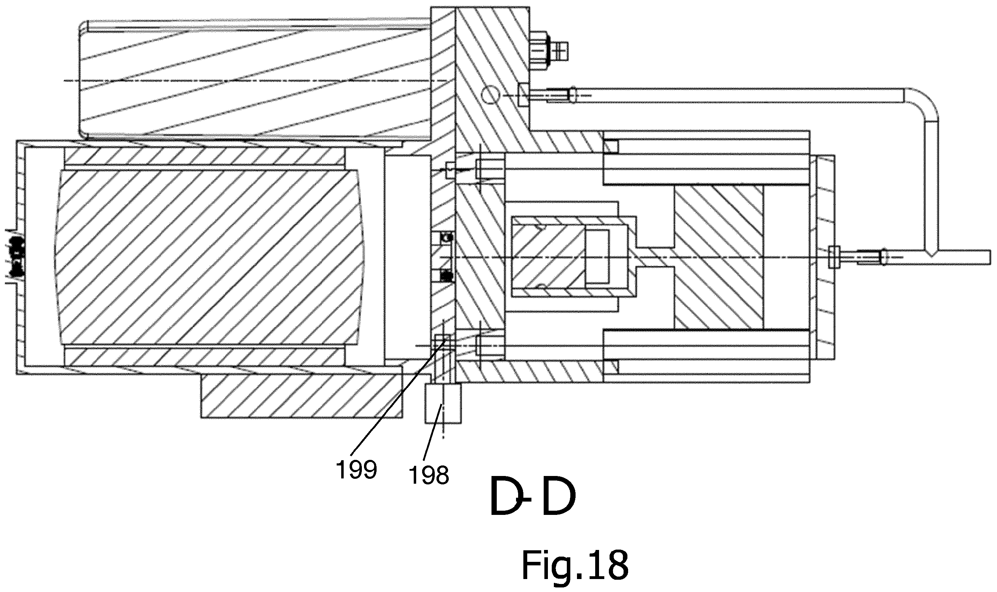

FIG. 17 is a side view of the integrated compressor of FIG. 11. FIG. 18 is a cross-sectional view along line D-D of the integrated compressor of FIG. 17. As shown in FIGS. 17 and 18, the integrated compressor 200 further comprises a fourth control valve 198 and a sixth control pin 199. The fourth control valve 198 is embedded in a housing of the compressor section 160. The sixth control pin 199 is connected to the fourth control valve 198. The sixth control pin 199 is provided at a connection between the inner chamber of the electric motor 103 and the sixth chamber 196 to selectively block the connection between the inner chamber of the electric motor 103 and the sixth chamber 196.

The following describes the operation of the integrated compressor 200.

When the pressure in the air suspension system is sufficient, the first compressor 185 should stop operating. The controller 104 controls the electric motor 103 to stop or continue operating depending on whether the second compressor 122 is required to continue operating. When continued operation of the electric motor 103 is required, the controller 104 actuates the fourth control pin 187 on the third control valve 186 to move to connect the seventh exhaust passage 180, the eighth exhaust passage 188, and the ninth exhaust passage 189. Since the ninth exhaust passage 189 is connected to the medium-pressure passage 177, the gas compressed in the fourth chamber 175 returns to the suction pipe 170 via the eighth exhaust passage 188, such that there is no pressure difference between the suction and discharge gases of the fourth chamber 175. Similarly, there is no pressure difference between the suction and discharge gases of the fifth chamber 179. The first compressor 185 does not operate.

In the event of excess moisture in the air dryer 142, the controller 104 actuates the fifth control pin 190 on the third control valve 186 to move to connect the air dryer 142 to the tenth exhaust passage 191. The high-pressure and dry gas from the air suspension is blown back into the air dryer 142 via the eighth exhaust passage 183 to carry away the moisture in the air dryer 142, and then discharged via the tenth exhaust passage 191 and the silencer 192 into the atmosphere. After the blowback is complete, the controller 104 actuates the fifth control pin 190 on the third control valve 186 to move to block the connection between the air dryer 142 and the tenth exhaust passage 191, at which point the fourth control pin 187 does not block the seventh exhaust passage 180, the eighth exhaust passage 188, and the ninth exhaust passage 189, and therefore the first compressor 185 does not operate.

After the second compressor 122 is started, refrigerant enters the inner chamber of the electric motor 103 through the low-pressure inlet 159 provided on the housing of the electric motor 103 to cool the stator 108. After heat exchange with the stator 108, the refrigerant enters the sixth chamber 196 through the refrigerant passage 194 and the refrigerant valve plate 195. The refrigerant is compressed in the sixth chamber 196 by the sixth piston 164, and then enters the refrigeration line of the refrigerator system through the exhaust pipe 117 to carry out refrigeration.

When the second compressor 122 stops operating, if it is still necessary for the first compressor 185 to continue operating, the controller 104 actuates the sixth control pin 199 on the fourth control valve 198 to move in order to connect the sixth chamber 196 and the inner chamber of the electric motor 103. In this way, the second compressor 122 has no pressure difference between the suction and discharge therefore does not operate.

The refrigerant may also draw heat from the stator 108 when it is necessary to cool the stator 108.

The compressor section 160 may compress the same medium or different mediums in the first compressor 185 and the second compressor 122. For example, the intake medium of the first compressor 185 may be changed to refrigerant, so that the first compressor 185 and the second compressor 122 compress the same medium to different pressures. In this case, the air dryer 142 is bypassed.

The compressor section 160 may also be used as a three-stage compressor. In this case, the integrated compressor 200 further comprises a pipe connected between the refrigerant passage 194 and the seventh exhaust passage 180. In this way, gas or other medium discharged from the first compressor 185 via the seventh exhaust passage 180 can enter the second compressor 122 via the refrigerant passage 194 to be further compressed.

The integrated compressor according to this application can compress two medium simultaneously in two parts. The two parts share a common motor and controller, which helps to reduce the cost, reduce the size, and solve the noise problem and EMC problem of the compressor. The controller can control the two parts of the integrated compressor to work simultaneously or separately, which helps to reduce the number of control valves and realize multi-functional integrated control.

The integrated compressor according to the present application can be used in both dual medium systems and single medium systems.

The integrated compressor according to the present application is configured to cause a refrigerant to flow through the motor, realizing cooling of the motor, and effectively solving the problem of overheating protection of the motor in a high temperature environment (e.g., summer). In a low-temperature environment (e.g., winter), the refrigerant can effectively recover the heat generated by the rotation of the motor, realizing the recycling of the heat of the motor.

The preceding description of the embodiments has been provided for illustrative and descriptive purposes. It is not intended to be exhaustive or to limit the embodiments to the variants described. Many modifications and variations will be apparent to those skilled in the art. These embodiments have been selected and described in order to best elucidate the principles and practical applications so that those skilled in the art will be able to understand the embodiments in terms of their various embodiments as well as the various modifications applicable to their intended use. Within the framework of the embodiments, the components and features described above may be combined between different embodiments.

Various non-limiting aspects of various embodiments described herein are presented in the following clauses.
1. An integrated compressor for a vehicle, the integrated compressor comprising:
   a motor (3);
   an inverter (4) connected to the motor (3) or integrated into the motor (3);
   a control unit (11) electrically connected to the inverter (4) to control the starting and stopping of the motor (3) via the inverter (4);
   characterized in that the integrated compressor comprises:
      a first compression chamber (1) and a second compression chamber (2), both of which are connected to the motor (3);
      a first two-position-two-way valve (5) connected to the first compression chamber (1);
      a second two-position-two-way valve (6) connected to the second compression chamber (2); and
      a first inlet line (8) receiving ambient air input at one end and connected to the second compression chamber (2) at the other end.
2. The integrated compressor according to clause 1, wherein
   the first two-position-two-way valve (5) comprises:
      a first intake port (50) connected to an exhaust port of the first compression chamber (1);
      a first exhaust port (51) connected to an intake port of the first compression chamber (1); and
      a first valve spool (52) for selectively connecting to or disconnecting from the first intake port (50) and the first exhaust port (51);
   wherein, in the case where the first intake port (50) and the first exhaust port (51) are connected, the gas discharged from the first compression chamber (1) is directed back to the first compression chamber (1).
3. The integrated compressor according to clause 1, wherein
   the second two-position-two-way valve (6) comprises:
      a second intake port (60) connected to an exhaust port of the second compression chamber (2);
      a second exhaust port (61) connected to an intake port of the second compression chamber (2); and
      a second valve spool (62) for selectively connecting to or disconnecting from the second intake port (60) and the second exhaust port (61);
   wherein, in the case where the second intake port (60) and the second exhaust port (61) are connected, the gas discharged from the second compression chamber (2) is directed back to the second compression chamber (2).
4. The integrated compressor according to clause 1, wherein
   the control unit (11) is configured to selectively control the state of the first two-position-two-way valve (5) and the second two-position-two-way valve (6) according to the actual needs of the vehicle.
5. The integrated compressor according to clause 4, wherein
   the control unit (11) is configured to control the first two-position-two-way valve (5) to be disconnected upon receipt of the on-board refrigerator activation signal, so that the refrigerant is compressed in the first compression chamber (1).
6. The integrated compressor according to clause 4, wherein
   the control unit (11) is configured to control the second two-position-two-way valve (6) to be disconnected upon receipt of the air suspension device activation signal, so that ambient air enters the first inlet line (8) and enters the second compression chamber (2) after being filtered by the air filter in the first inlet line (8), then compressed in the second compression chamber (2).
7. The integrated compressor according to any one of clauses 1-6, wherein
   the integrated compressor comprises a first freewheel (3a) for unidirectional transmission;
   the first freewheel (3a) is connected between the motor (3) and the second compression chamber (2), configured to transfer the power of the motor (3) to the second compression chamber (2) when the motor (3) is moving in the first direction, and configured to prevent the power of the motor (3) from being transferred to the second compression chamber (2) when the motor (3) is moving in the second direction opposite to the first direction.
8. The integrated compressor according to clause 7, wherein
   the integrated compressor comprises a second freewheel (3b) for unidirectional transmission;
   the second freewheel (3b) is connected between the motor (3) and the first compression chamber (1), configured to transfer the power of the motor (3) to the first compression chamber (1) when the motor (3) is rotating in the first direction, and configured to prevent the power of the motor (3) from being transferred to the first compression chamber (1) when the motor (3) is moving in the second direction.
9. The integrated compressor according to clause 8, wherein
   the first freewheel (3a) and the second freewheel (3b) comprise an electromagnetic clutch or a ratchet mechanism.
10. A system in a vehicle, characterized in that the system comprises:
   an integrated compressor according to any one of clauses 1-9;
   an on-board refrigerator connected to the integrated compressor to receive refrigerant from a first compression chamber (1) of the integrated compressor and to return the refrigerant after participating in refrigeration to a motor (3) of the integrated compressor to cool the motor (3); and
   an air suspension device connected to an integrated compressor to receive air from a second compression chamber (2) of the integrated compressor.
11. The system according to clause 10, wherein
   the on-board refrigerator comprises:
   a condenser (13) connected to the first compression chamber (1) of the integrated compressor;
   a first exhaust line (9) which connects the condenser (13) to the first compression chamber (1) of the integrated compressor;
   a temperature pressure sensor (12) provided in the first exhaust line (9);
   a fan (14) arranged near the condenser (13) to dissipate heat from the condenser (13);
   an evaporator (17) connected to the condenser (13) with the aid of a refrigerant line (34);
   a second inlet line (7) which connects the evaporator (17) to the motor (3);
   an electronic expansion valve (15) provided in the refrigerant line (34); and
   a refrigerator cooling chamber (16) connected to an evaporator (17) to cool with the aid of heat exchange with the evaporator (17).
12. The system according to clause 11, wherein
   the air suspension device comprises:
   a two-position-four-way valve (26);
   a second exhaust line (10) which connects the two-position-four-way valve (26) and a second compression chamber (2) of the integrated compressor;
   an air suspension main line (22) connected to the two-position-four-way valve (26);
   a pressure sensor (23), a first solenoid valve (28), a second solenoid valve (29), a third solenoid valve (30), a fourth solenoid valve (31), and a fifth solenoid valve (32), all of which are connected to the air suspension main line (22);
   an air storage tank (24) connected to the first solenoid valve (28);
   a dryer (25) provided in the second exhaust line (10);
   a left front wheel air suspension (18), a right front wheel air suspension (19), a left rear wheel air suspension (20), and a right rear wheel air suspension (21), which are connected to the second solenoid valve (29), the third solenoid valve (30), the fourth solenoid valve (31), and the fifth solenoid valve (32), respectively;
   a throttle valve (27) provided in the air suspension main line (22); and
   a silencer (33) connected to the two-position-four-way valve (26).
13. The system according to clause 12, wherein
   The two-position-four-way valves (26) comprises:
   a third intake port (260) connected to the second exhaust line (10) via the dryer (25);
   a fourth intake port (261) which bypasses the dryer (25) and is connected directly to the second exhaust line (10);
   a third exhaust port (262) connected to the air suspension main line (22);
   a fourth exhaust port (263) connected to the silencer (33); and
   a third valve spool (264) configured to selectively connect or disconnect the third intake port (260) and the third exhaust port (262) and to selectively connect or disconnect the fourth intake port (261) and the fourth exhaust port (263).
14. An integrated compressor comprising:
   an electric motor;
   a first compressor connected to and driven by the electric motor;
   characterized in that
   the integrated compressor comprises a second compressor and a controller;
   the second compressor is connected to and driven by the electric motor;
   the controller is provided on the electric motor and is configured to control the starting and stopping of the electric motor, to control the direction of flow of the medium in the first compressor, and to control the direction of flow of the medium in the second compressor.
15. The integrated compressor according to clause 14, wherein
   the first compressor and the second compressor are provided on opposite sides of the electric motor;
   the electric motor comprises an inlet, a stator, a rotor, a first crankshaft and a second crankshaft;
   the inlet is provided on the housing of the electric motor and is fluidly connected to the inner cavity of the electric motor;
   the stator and the rotor are each provided in an inner cavity of the electric motor;
   the first crankshaft extends from the rotor into the first compressor; and
   the second crankshaft extends from the rotor into the second compressor.
16. The integrated compressor according to clause 15, wherein
   the first compressor comprising a first control valve; and
   the first control valve is configured to be operable to move between a plurality of positions to change the direction of flow of the medium in the first compressor, changing the state of work done by the first compressor without changing the operating state of the electric motor.
17. The integrated compressor according to clause 16, wherein
   the second compressor comprising a second control valve; and
   the second control valve is configured to be operable to move between a plurality of positions to change the direction of flow of the medium in the second compressor to change the state of work done by the second compressor without changing the state of operation of the electric motor.
18. The integrated compressor according to clause 14, wherein
   the electric motor comprises a stator, a rotor, a electric motor shaft, and a low-pressure inlet;
   the stator and the rotor are each provided in an inner cavity of the electric motor;
   the electric motor shaft is fixed to the rotor or integrally molded with the rotor; and
   the low-pressure inlet is provided on the housing of the electric motor and is connected to the inner cavity of the electric motor.
19. The integrated compressor according to clause 18, wherein
   the integrated compressor comprises a compressor section, a variator, a piston connector, a fourth chamber, a fifth chamber, a sixth chamber, a fourth piston, a fifth piston, and a sixth piston;
   the piston connector is slidably provided in the compressor section and is connected to the electric motor via the variator;
   the fourth chamber, the fifth chamber and the sixth chamber are provided in the fourth chamber, the fifth chamber and the sixth chamber, respectively, and are each connected to the piston connector;
   the fifth chamber and the sixth chamber are each connected to the fourth chamber;
   the fourth piston, the fourth chamber, the fifth piston and the fifth chamber constitute the first compressor; and
   the sixth piston and the sixth chamber constitute the second compressor.
20. The integrated compressor according to clause 19, wherein
   the integrated compressor comprises a third control valve; and
   the third control valve is configured to be operable to move between a plurality of positions to change the direction of flow of the medium in the compressor section to change the state of work done by the first compressor without changing the operating state of the electric motor.
21. The integrated compressor according to clause 20, wherein
   the integrated compressor comprises a fourth control valve; and
   the fourth control valve is configured to be operable to move between a plurality of positions to change the direction of flow of the medium in the compressor section to change the state of work done by the second compressor without changing the operating state of the electric motor.
22. The integrated compressor according to any one of clauses 14-21, wherein
   the first compressor and the second compressor compress the same medium.
23. The integrated compressor according to any one of clauses 14-21, wherein
   the first compressor and the second compressor compress different mediums.
24. A vehicle, characterized in that it comprises an integrated compressor according to any of clauses 14-23.

## Claims

1. An integrated compressor for a vehicle, the integrated compressor comprising:
a motor (3);
an inverter (4) connected to the motor (3) or integrated into the motor (3);
a control unit (11) electrically connected to the inverter (4) to control the starting and stopping of the motor (3) via the inverter (4);
**characterized in that** the integrated compressor comprises:
a first compression chamber (1) and a second compression chamber (2), both of which are connected to the motor (3);
a first two-position-two-way valve (5) connected to the first compression chamber (1);
a second two-position-two-way valve (6) connected to the second compression chamber (2); and
a first inlet line (8) receiving ambient air input at one end and connected to the second compression chamber (2) at the other end.

2. The integrated compressor according to claim 1, wherein
the first two-position-two-way valve (5) comprises:
a first intake port (50) connected to an exhaust port of the first compression chamber (1);
a first exhaust port (51) connected to an intake port of the first compression chamber (1); and
a first valve spool (52) for selectively connecting to or disconnecting from the first intake port (50) and the first exhaust port (51);
wherein, in the case where the first intake port (50) and the first exhaust port (51) are connected, the gas discharged from the first compression chamber (1) is directed back to the first compression chamber (1);
the second two-position-two-way valve (6) comprises:
a second intake port (60) connected to an exhaust port of the second compression chamber (2);
a second exhaust port (61) connected to an intake port of the second compression chamber (2); and
a second valve spool (62) for selectively connecting to or disconnecting from the second intake port (60) and the second exhaust port (61);
wherein, in the case where the second intake port (60) and the second exhaust port (61) are connected, the gas discharged from the second compression chamber (2) is directed back to the second compression chamber (2).

3. The integrated compressor according to claim 1, wherein
the control unit (11) is configured to selectively control the state of the first two-position-two-way valve (5) and the second two-position-two-way valve (6) according to the actual needs of the vehicle.

4. The integrated compressor according to claim 3, wherein
the control unit (11) is configured to control the second two-position-two-way valve (6) to be disconnected upon receipt of the air suspension device activation signal, so that ambient air enters the first inlet line (8) and enters the second compression chamber (2) after being filtered by the air filter in the first inlet line (8), then compressed in the second compression chamber (2).

5. The integrated compressor according to any one of claims 1-4, wherein
the integrated compressor comprises a first freewheel (3a) and a second freewheel (3b) for unidirectional transmission;
the first freewheel (3a) is connected between the motor (3) and the second compression chamber (2), configured to transfer the power of the motor (3) to the second compression chamber (2) when the motor (3) is moving in the first direction, and configured to prevent the power of the motor (3) from being transferred to the second compression chamber (2) when the motor (3) is moving in the second direction opposite to the first direction;
the integrated compressor comprises a second freewheel (3b) for unidirectional transmission;
the second freewheel (3b) is connected between the motor (3) and the first compression chamber (1), configured to transfer the power of the motor (3) to the first compression chamber (1) when the motor (3) is rotating in the first direction, and configured to prevent the power of the motor (3) from being transferred to the first compression chamber (1) when the motor (3) is moving in the second direction.

6. A system in a vehicle, **characterized in that** the system comprises:
an integrated compressor according to any one of claims 1-5;
an on-board refrigerator connected to the integrated compressor to receive refrigerant from a first compression chamber (1) of the integrated compressor and to return the refrigerant after participating in refrigeration to a motor (3) of the integrated compressor to cool the motor (3); and
an air suspension device connected to an integrated compressor to receive air from a second compression chamber (2) of the integrated compressor.

7. The system according to claim 6, wherein
the on-board refrigerator comprises:
a condenser (13) connected to the first compression chamber (1) of the integrated compressor;
a first exhaust line (9) which connects the condenser (13) to the first compression chamber (1) of the integrated compressor;
a temperature pressure sensor (12) provided in the first exhaust line (9);
a fan (14) arranged near the condenser (13) to dissipate heat from the condenser (13);
an evaporator (17) connected to the condenser (13) with the aid of a refrigerant line (34);
a second inlet line (7) which connects the evaporator (17) to the motor (3);
an electronic expansion valve (15) provided in the refrigerant line (34); and
a refrigerator cooling chamber (16) connected to an evaporator (17) to cool with the aid of heat exchange with the evaporator (17);
the air suspension device comprises:
a two-position-four-way valve (26);
a second exhaust line (10) which connects the two-position-four-way valve (26) and a second compression chamber (2) of the integrated compressor;
an air suspension main line (22) connected to the two-position-four-way valve (26);
a pressure sensor (23), a first solenoid valve (28), a second solenoid valve (29), a third solenoid valve (30), a fourth solenoid valve (31), and a fifth solenoid valve (32), all of which are connected to the air suspension main line (22);
an air storage tank (24) connected to the first solenoid valve (28);
a dryer (25) provided in the second exhaust line (10);
a left front wheel air suspension (18), a right front wheel air suspension (19), a left rear wheel air suspension (20), and a right rear wheel air suspension (21), which are connected to the second solenoid valve (29), the third solenoid valve (30), the fourth solenoid valve (31), and the fifth solenoid valve (32), respectively;
a throttle valve (27) provided in the air suspension main line (22); and
a silencer (33) connected to the two-position-four-way valve (26).

8. The system according to claim 7, wherein
the two-position-four-way valves (26) comprises:
a third intake port (260) connected to the second exhaust line (10) via the dryer (25);
a fourth intake port (261) which bypasses the dryer (25) and is connected directly to the second exhaust line (10);
a third exhaust port (262) connected to the air suspension main line (22);
a fourth exhaust port (263) connected to the silencer (33); and
a third valve spool (264) configured to selectively connect or disconnect the third intake port (260) and the third exhaust port (262) and to selectively connect or disconnect the fourth intake port (261) and the fourth exhaust port (263).

9. An integrated compressor comprising:
an electric motor;
a first compressor connected to and driven by the electric motor;
**characterized in that**
the integrated compressor comprises a second compressor and a controller;
the second compressor is connected to and driven by the electric motor;
the controller is provided on the electric motor and is configured to control the starting and stopping of the electric motor, to control the direction of flow of the medium in the first compressor, and to control the direction of flow of the medium in the second compressor.

10. The integrated compressor according to claim 9, wherein
the first compressor and the second compressor are provided on opposite sides of the electric motor;
the electric motor comprises an inlet, a stator, a rotor, a first crankshaft and a second crankshaft;
the inlet is provided on the housing of the electric motor and is fluidly connected to the inner cavity of the electric motor;
the stator and the rotor are each provided in an inner cavity of the electric motor;
the first crankshaft extends from the rotor into the first compressor; and
the second crankshaft extends from the rotor into the second compressor.

11. The integrated compressor according to claim 10, wherein
the first compressor comprising a first control valve; and
the first control valve is configured to be operable to move between a plurality of positions to change the direction of flow of the medium in the first compressor, changing the state of work done by the first compressor without changing the operating state of the electric motor.

12. The integrated compressor according to claim 11, wherein
the second compressor comprising a second control valve; and
the second control valve is configured to be operable to move between a plurality of positions to change the direction of flow of the medium in the second compressor to change the state of work done by the second compressor without changing the state of operation of the electric motor.

13. The integrated compressor according to claim 9, wherein
the electric motor comprises a stator, a rotor, a electric motor shaft, and a low-pressure inlet;
the stator and the rotor are each provided in an inner cavity of the electric motor;
the electric motor shaft is fixed to the rotor or integrally molded with the rotor; and
the low-pressure inlet is provided on the housing of the electric motor and is connected to the inner cavity of the electric motor.

14. The integrated compressor according to claim 13, wherein
the integrated compressor comprises a compressor section, a variator, a piston connector, a fourth chamber, a fifth chamber, a sixth chamber, a fourth piston, a fifth piston, and a sixth piston;
the piston connector is slidably provided in the compressor section and is connected to the electric motor via the variator;
the fourth chamber, the fifth chamber and the sixth chamber are provided in the fourth chamber, the fifth chamber and the sixth chamber, respectively, and are each connected to the piston connector;
the fifth chamber and the sixth chamber are each connected to the fourth chamber;
the fourth piston, the fourth chamber, the fifth piston and the fifth chamber constitute the first compressor; and
the sixth piston and the sixth chamber constitute the second compressor.

15. The integrated compressor according to claim 14, wherein
the integrated compressor comprises a third control valve and a fourth control valve;
the third control valve is configured to be operable to move between a plurality of positions to change the direction of flow of the medium in the compressor section to change the state of work done by the first compressor without changing the operating state of the electric motor; and
the fourth control valve is configured to be operable to move between a plurality of positions to change the direction of flow of the medium in the compressor section to change the state of work done by the second compressor without changing the operating state of the electric motor.
